# EUROPÄISCHE PATENTSCHRIFT

(11) **EP 0 585 874 B1**
(45) Veröffentlichungstag und Bekanntmachung des Hinweises auf die Patenterteilung: **12.03.1997**
(21) Anmeldenummer: 93113902.6
(22) Anmeldetag: 31.08.1993
(51) Int. Cl.: D02G 3/04, D02G 3/40, F16C 33/20

(54) **Mischgarn zur Herstellung der Gleitschicht von Gleitlagern aus faserverstärkten Thermoplasten**
Blended yarn for manufacturing the sliding layer of sliding-contact bearings made of fibre-reinforced thermoplastic materials
Fil mélangé pour la fabrication de la couche de glissement de paliers à contact lisse en matières thermoplastiques renforcées par des fibres

(30) Priorität: 04.09.1992 DE 4229581
(43) Veröffentlichungstag der Anmeldung: 09.03.1994
(73) Patentinhaber: HOECHST AKTIENGESELLSCHAFT, 65926 Frankfurt am Main (DE)
(72) Erfinder: Gebauer, Elke, D-86399 Bobingen (DE)

(56) Entgegenhaltungen:
- DE-A- 3 916 137
- DE-B- 2 150 847
- DE-C- 2 302 206
- DE-C- 2 341 333
- GB-A- 2 230 795
- US-A- 3 692 375

## Beschreibung

Die vorliegende Erfindung betrifft ein Mischgarn zur Herstellung von Gleitlagern insbesondere der Gleitschicht von Gleitlagern aus faserverstärkten Thermoplasten.

Gleitlager sind Lager bei dem ein bewegter Teil (meist eine Welle) auf Gleitflächen in einer feststehenden Lagerschale im Lagergehäuse gleitet. Die Vorteile der Gleitlager bestehen darin, daß sie stoßdämpfend wirken, geräuschlos laufen, eine sehr präzise Führung der Welle zulassen und bei Dauerbetrieb eine außerordentlich lange Lebensdauer haben. Zwischen der Gleitfläche des Gleitlagers und der Oberfläche der sich darin drehenden Welle tritt eine gleitende Reibung auf, die durch Schmierung möglichst klein gehalten wird. Für den Fall, daß es im Betrieb des Gleitlagers an Schmiermittel mangelt und für die Anlauf- und Auslaufphase der Drehbewegung sollen Gleitlager möglichst gute Trockenlaufeigenschaften aufweisen. Dieser Forderung hat man in der Technik durch gezielte Auswahl der Lagermaterialien Rechnung zu tragen versucht. So sind für die Herstellung von Gleitlagerschalen Metalle mit besonders niedriger Oberflächenreibung, aber auch Asbest oder Graphit eingesetzt worden. Es ist auch bereits bekannt, Gleitlager aus Kunststoffverbundmaterialien herzustellen.

In der US-Patentschrift 2 953 418 wird ein Kunststoffgleitlager beschrieben, und ein Verfahren zu seiner Herstellung bei dem ein Polytetrafluorethylen(Teflon)-Fasergarn mit einem hitzeschrumpffähigen, harzkompatiblen Polyamidgarn verzwirnt oder umwunden wird. Das so erhaltene Mischgarn wird mit einem hitzehärtbaren Harz z. B. einem Phenol- oder Epoxyharz imprägniert, durch spiralenförmiges Aufwickeln auf einen Kern zum Lager geformt und zur Aushärtung des Harzes einer Hitzebehandlung unterworfen. Ein ähnliches Verfahren zur Herstellung von Kunststoffgleitlagern ist aus der britischen Patentschrift 1 228 503 bekannt. Dort wird ein Glasfaserbündel mit einem Polytetrafluorethylen/Baumwoll-Mischgarn umsponnen und das umsponne Bündel anschließend mit einem hitzehärtbaren Harz, das zusätzlich noch feinverteilte Polytetrafluorethylen Partikel enthalten kann, gründlich imprägniert. Das so erhaltene lineare Fasergebilde wird zur Lagerform gewickelt und das Harz ausgehärtet.

Ein ähnlicher Gedanke ist der DE-B 21 50 847 zu entnehmen. In dieser Druckschrift wird ein Gleitschichtstoff für Lager vorgestellt, der aus einem mit einem hitzehärtbaren Harz imprägnierten Mischgarn besteht, welches durch lockeres Verdrillen von Polytetrafluorethylenfäden mit Polyamidfäden erhalten wird.

Aus der deutschen Patentschrift 23 02 206 ist ein Verfahren zur Herstellung eines reibungsarmen Gleitschichtstoffs für Lager bekannt, bei dem zunächst Stränge von im wesentlichen unverdrillten Polyamidfäden und Stränge von im wesentlichen unverdrillten Polytetrafluorethylenfäden mit einem speziellen Flechtverfahren, um einen Kern so herumgeflochten werden, daß sich an der Oberfläche des Kerns eine schlauchartige textile Gewebestruktur ergibt. Diese wird mit einem härtbaren Harz beispielsweise einem Epoxyd- oder Phenolharz imprägniert und ausgehärtet. Ein ähnliches Verfahren zur Herstellung von Lagern ist aus der US-PS 3 692 375 bekannt, bei dem ebenfalls Stränge aus Garnen mit niedrigen Reibungskoeffezienten z. B. aus Polytetrafluorethylen und Garnen aus Verstärungsfasern z. B. Glasfasern kreuzweise um einen Dorn geflochten werden und das erhaltene schlauchartige Fasergeflecht mit einem hitzehärtbaren Harz, beispielsweise einem Epoxydharz, imprägniert und ausgehärtet wird.

Aus der deutschen Patentschrift 23 41 333 ist ebenfalls ein Verfahren zur Herstellung von Gleitlagern bekannt, bei dem Kordeln aus Polytetrafluorethylen-Multifilamentgarnen zu einem gewebeartigen Schlauch auf einen Dorn geflochten werden, dieser Gewebeschlauch mit einem hitzehärtbaren Harz imprägniert und anschließend ausgehärtet wird.

Allen diesen bekannten Verfahren zur Herstellung von faserverstärkten Kunststoffgleitlagern ist gemeinsam, daß die Fasern in einer Matrix aus einem hitzehärtbaren Harz, beispielsweise einem härtbaren, ungesättigten Polyesterharz, einem Phenolharz, Melaminharz oder Epoxyharz eingebettet sind. Ein Nachteil bei der Herstellung von Gleitlagern, die als Matrix ein hitzehärtbares Duroplastharz enthalten, besteht darin, daß es schwierig ist, die auf den Dorn gewickelten oder gepflochtenen Faserstränge homogen mit dem flüssigen Harz zu imprägnieren. Dies ist insbesondere dann der Fall, wenn die eingesetzten Garne wie üblich noch einen Schlichteauftrag enthalten.

Aus der deutschen Offenlegungsschrift 39 16 137 ist auch bereits ein Gleitlager aus faserverstärkten temperaturbeständigen thermoplastischen Kunststoffen bekannt. In dieser Druckschrift wird jedoch ausgeführt, daß sich Polytetrafluorethylenmaterialien für die Herstellung zumindest dieses Gleitlagertyps nicht eignen, da dieses Material bereits bei niedrigen Temperaturen wie z. B. bei Zimmertemperatur und geringen Drücken zu einer als "Kriechen" bezeichneten Verformung neigt. In dieser Druckschrift wird daher vorgeschlagen, Mischgarne aus Verstärkungsfasern, die z. B. aus Glas, Kohlenstoff oder aromatischen Polyamiden bestehen können, und thermoplastischen Fasern, Bändchen oder Partikel mit einem Schmelzpunkt oberhalb 180 °C, vorzugsweise oberhalb von 200 °C, auf einen Dorn zu einem Gleitlager zu wickeln und die Wicklung auf eine Temperatur zu erwärmen oberhalb der Schmelztemperatur der thermoplastischen Materialien. Bei dieser Behandlung schmelzen die thermoplastischen Partikel, Fasern oder Bändchen und füllen die Hohlräume zwischen den unschmelzbaren Faser, so daß nach dem Abkühlen ein formstabiles Gleitlager erhalten wird.

Die aus der deutschen Offenlegungsschrift 39 16 137 bekannten Gleitlager bestehen zwar aus einem faserverstärkten Thermoplasten, enthalten aber keine die Gleitfähigkeit erhöhenden Bestandteile. Vielmehr liegt der in dieser Druckschrift beschriebenen Erfindung die Aufgabe zugrunde, die Verwendung von Polytetrafluorethylen und anderen hochgleitfähigen Polymeren zu vermeiden, da diese zu stark zum Kriechen neigen. Diese bekannten Gleitlager haben aber unbefriedigende Trockenlaufeigenschaften.

Es wurde nun gefunden, daß man Gleitlager mit sehr guten Trockenlaufeigenschaften dann erhält, wenn man zumindestens die Gleitschicht der Gleitlager aus einem faserverstärkten Thermoplasten herstellt, der durch Wickeln des unten beschriebenen Mehrkomponentenmischgarns aufgebaut werden kann.

Ein Gegenstand dieser Erfindung ist das zur Herstellung der Gleitfläche dieser Gleitlager geeignete Mehrkomponentenmischgarn. Es besteht aus mindestens drei Komponenten und enthält als erste Komponente 40 bis 70 Volumenprozent thermoplastische Fasern, als zweite Komponente 10 bis 30 Volumenprozent Fasern aus Polyfluorkohlenwasserstoffen und als dritte Komponente 10 bis 50 Volumenprozent Faser aus einem Polymer dessen Schmelzpunkt mindestens 20 °C oberhalb des Schmelzpunkts der Fasern der ersten Komponente liegt. Vorzugsweise besteht das Mehrkomponentenmischgarn aus 40-60 Vol.% der ersten, 10-30 Vol.% der zweiten und 10-30 Vol.% der dritten Faserkomponente.

Unter Fasern im Sinne dieser Erfindung werden sowohl Stapelfasern als auch Endlosfasern verstanden. Das erfindungsgemäße Mehrkomponentengarn kann beispielsweise alle drei obengenannten Komponenten in Form von Stapelfasern gleichmäßig verteilt enthalten. Es besteht aber auch die Möglichkeit, daß eine oder zwei Komponenten in Form von Endlosfasern und zwei bzw. eine Komponente in Form von Stapelfasern in dem erfindungsgemäßen Mischgarn vorliegt.
Bevorzugt sind jedoch erfindungsgemäße Mischgarne in denen alle drei Komponenten in Form von Endlosfasern vorliegen.

Die Stapellänge von Stapelfasern die in den erfindungsgemäßen Mischgarnen enthalten sein können, wird so bemessen, daß die Fasern spinnfähig sind. Für Fasern mit Titern zwischen ein und zehn dtex kommen zweckmäßigerweise Stapellängen oberhalb 10 bis 20 mm in betracht für gröbere Titer wählt man entsprechend größere Stapellängen.

Die drei Komponenten des erfindungsgemäßen Mehrkomponentenmischgarns können in dem Garn in idealer statistischer Verteilung vorliegen. Ein solches erfindungsgemäßes Mischgarn kann erhalten werden durch gemeinsames Sekundär-Verspinnen einer entsprechenden Stapelfaser-Mischung, vorzugsweise aber durch gemeinsames Verblasen von wenig oder gar nicht gedrehten, endlosen Multifilamentsträngen der drei Faserkomponenten.

Überraschenderweise hat es sich jedoch gezeigt, daß es vorteilhafter ist, wenn im Querschnitt des Mischgarns eine Vielzahl von Bereichen statistisch gleichmäßig verteilt sind, in denen die Fasern jeweils einer Faserkomponente gehäuft sind.
Ein solches erfindungsgemäßes Mischgarn wird durch Fachen von Vorgarnen, die jeweils aus einer der Mischgarnkomponenten bestehen, hergestellt. Das Fachen kann in an sich bekannter Weise, besonders vorteilhaft aber durch gemeinsames Verzwirnen oder durch Verflechten erfolgen.

Besonders bevorzugt sind erfindungsgemäße Mehrkomponentenmischgarne bei denen im Querschnitt des Mischgarns eine Vielzahl von Bereichen statistisch gleichmäßig verteilt sind, in denen die Fasern der zweiten Komponente mit zumindestens einem Teil der Fasern der dritten Komponente enger vereinigt sind, d.h. in denen die Fasern der zweiten Komponente mit zumindestens einem Teil der Fasern der dritten Komponente in statistisch gleichmäßiger Verteilung vorliegen oder alle Bereiche der zweiten Faserkomponente unmittelbar an Bereiche der dritten Faserkomponente angrenzen.

Diese besonders bevorzugten erfindungsgemäßen Mehrkomponentenmischgarne werden dann erhalten, wenn man die Garne aus der zweiten und aus der dritten Komponente zunächst miteinander verbläst oder verzwirnt. Hierbei ist es allerdings nicht erforderlich, das Garn der zweiten Komponente mit dem gesamten Anteil des Garns der dritten Komponente zu verblasen oder zu verzwirnen, sondern es ist auch möglich, den Titer des Vorgarns der dritten Komponente in zwei Garne aufzuteilen und eines dieser Garne zunächst mit dem Garn der zweiten Komponente zu verblasen oder zu verzwirnen. In diesen Fall werden 20 bis 60 % des zur Herstellung des erfindungsgemäßen Mischgarns vorgesehen Garntiters der dritten Garnkomponente mit dem Garn der zweiten Garnkomponente gemischt. Das so erhaltene Mischgarn aus der zweiten Komponente und einen Teil der dritten Komponente des erfindungsgemäßen Mehrkomponentenmischgarns wird dann mit dem Resttiter der dritten Garnkomponente und mit dem Garn aus der ersten Komponente gefacht. Bei dieser zweistufigen Herstellung verwendet man zweckmäßigerweise in der ersten und zweiten Stufe gegenläufige Zwirndrehungen.

Das Vorgarn aus der ersten Komponente wird vorteilhafterweise als ungedrehter Filamentstrang oder als ein Garn mit nur einer geringen Drehung von maximal 100 Touren pro Meter, beispielsweise mit einem Schutzdrall von 10 bis 30 Touren pro Meter, eingesetzt.

Der Gesamttiter des erfindungsgemäßen Mehrkomponentenmischgarns liegt zweckmäßigerweise zwischen 500 und 5000 dtex.
Besonders bevorzugt sind für die Garne der ersten Komponente 100 bis 2000 dtex, für die Filamente der zweiten Komponente 100 bis 1000 dtex und für die Filamente der dritten Komponente 100 bis 500 dtex.

Die Einzeltiter der Fasern des Mehrkomponentenmischgarns liegen vorzugsweise im Bereich zwischen 1 und 15 dtex. Feinere Einzeltiter können selbstverständlich eingesetzt werden, sind aber wegen der höheren Gestehkosten nur dann erforderlich, wenn ein besonders weiches, schmiegsames und flexibles Mehrkomponentenmischgarn hergestellt werden soll, z. B. zum Wickeln besonders präziser Gleitlager. Titer oberhalb von 10 dtex können ebenfalls verwendet werden, solange sich dadurch die Elastizität und Wickelfähigkeit der erfindungsgemäßen Mehrkomponentengarne nicht unzulässig verschlechtert.
Besonders bevorzugt sind für die Filamente der ersten Komponente Einzeltiter (Kapillartiter) von 1 bis 7 dtex, für die Filamente der zweiten Komponente 2 bis 8 dtex und für die Filamente der dritten Komponente 4 bis 12 dtex.

Die Fasern der ersten Garnkomponente (im Folgenden auch Matrixgarn genannt) bestehen aus einem thermoplastischen Polymer. Das Material dieser Garnkomponente bildet in der Gleitfläche des fertigen Gleitlagers die Matrix in der die Filamente der zweiten und dritten Garnkomponente gleichmäßig verteilt und eingebettet sind. Die Auswahl des thermoplastischen Polymermaterials erfolgt daher anhand des Anforderungsprofils, insbesondere im Hinblick auf die beim Betrieb des Gleitlagers zu erwartende Temperatur. Geeignete thermoplastische Polymere sind beispielsweise Polyolefine mit einem Schmelzpunkt zwischen 150 und 200 °C, Polyamide wie z. B. Polyamid 6, Polyamid 66 und Polyamid 46 mit Schmelzpunkten zwischen 220 und 295 °C, aromatische Polyamide mit Schmelzpunkten über 300 °C, Polyester wie z. B. Polybutylenterephthalat und Polyethylenterephthalat mit Schmelzpunkten zwischen 225 und 250 °C oder aromatische Polyester mit Schmelzpunkten über 250 °C Polycarbonat mit einem Schmelzpunkt von etwa 225 °C, Polyphenylenether mit einem Schmelzpunkt von 215 °C, Polyarylensulfide mit Schmelzpunkten zwischen 250 und 300 °C die z. B. Polyphenylensulfid mit einem Schmelzpunkt von 276 °C, thermoplastisches Polyimid oder Polyetherimid mit Schmelzpunkten von 215 bis 260 °C, Polysulfon mit einem Schmelzpunkt von 180 bis 190 °C, Polyamidimid mit einem Schmelzpunkt von 280 °C, Polyethersulfon mit einem Schmelzpunkt von 220 bis 230 °C, ferner die Polyetherketone PEK, PEEK, PEKEKK, PEEKK, PEKK, mit Schmelzpunkten zwischen 340 und 410 °C.

Die zweite Faserkomponente des erfindungsgemäßen Mehrkomponentenmischgarns besteht aus Polyfluorkohlenwasserstoffen insbesondere der schmelzspinnbaren Typen, wie sie in der deutschen Offenlegungsschrift 41 31 746 beschrieben sind. Aus dieser Gruppe bekannter Polyfluorkohlenwasserstoffe ist die Auswahl so zu treffen, daß auch der Schmelzpunkt der Fasern der zweiten Komponente mindestens 20 °C vorzugsweise mindestens 50 °C oberhalb des Schmelzpunkts der Fasern der ersten Komponente liegt.

Das Material der dritten Faserkomponente kann organisch oder anorganisch sein und die organischen Fasern können aus natürlichen, halbsynthetischen oder synthetischen Polymeren bestehen. Geeignete anorganische Fasern sind beispielsweise Kohlenstoffasern oder Glas- oder Keramikfasern. Bevorzugt als dritte Faserkomponente sind organische Fasern, wobei als natürliche Fasern insbesondere Zellulosefasern in betracht kommen. Als halbsynthetische Fasern eignen sich Regeneratzellulose- oder Azetylzellulosefasern. Besonders bevorzugt aber sind Synthesefasern, insbesondere solche aus Polyacrylnitril oder einen der obengenannten thermoplastischen Materialien.

Werden Fasern der dritten Komponente aus einem thermoplastischen Material gewählt, so ist darauf zu achten, daß der Schmelzpunkt des dafür ausgewählten Polymeren mindestens 20 vorzugsweise mindestens 50 °C über dem Schmelzpunkt der ersten Faserkomponente liegt.
Die Fasern der dritten Komponente des erfindungsgemäßen Mehrkomponentenmischgarns bilden in der Gleitschicht des fertigen Gleitlagers die stabilisierende, Festigkeit gebende Verstärkungsfaser und sie haben überraschenderweise gleichzeitig die Funktion eines Haftvermittlers.

Beispiele für Werkstoffpaare, die für die erste und dritte Komponente des erfindungsgemäßen Mehrkomponentenmischgarns eingesetzt werden können, sind Polyestermatrixgarn mit Polyacrylnitril-Verstärkungsfasern, Polyestermatrixgarn mit Polyphenylensulfid-Verstärkungsfasern, Polyphenylensulfidmatrixgarn mit Polyetherketon-Verstärkungsfasern und Polyolefinmatrixgarn mit Polyester-Verstärkungsfasern.

Das erfindungsgemäße Mehrkomponentenmischgarn wird vorzugsweise eingesetzt zur Herstellung der Gleitflächen von Gleitlagern, kann aber mit gutem Erfolg auch für die Herstellung anderer Konstruktionselemente wie beispielsweise von Gleitringdichtungen eingesetzt werden. Für die Herstellung von Gleitlagern beispielsweise wird das Garn auf einen Dorn gewickelt, die Wicklung fixiert, beispielsweise durch Aufbringen einer weiteren Schutzwicklung aus einem polytetrafluorethylenfreien Mischgarn aus einer niedriger und einer höher schmelzenden Faserkomponente, und Erwärmung der Wicklung auf eine Temperatur, die über dem Schmelzpunkt der Fasern der ersten Garnkomponente des erfindungsgemäßen Mischgarns aber unterhalb der Schmelztemperatur der Fasern der zweiten und der dritten Garnkomponente liegt. Hierbei schmelzen die thermoplastischen Fasern der ersten Garnkomponente zu einer homogenen Matrix zusammen, in die Fasern der zweiten und dritten Garnkomponente eingebettet sind. Nach Abkühlen der Wicklung kann man das erhaltene Gleitlager vom Dorn abziehen.

Zur Veranschaulichung der vorliegenden Erfindung wird in den folgenden Ausführungsbeispielen die Herstellung erfindungsgemäßer Mehrkomponentermischgarne beschrieben.

### Beispiel 1

Ein locker gedrehtes Polytetrafluorethylengarn 455 dtex f 60x1 mit einem Schutzdrall von 25 Drehungen pro Meter und ein Polyphenylensulfidgarn 220 dtex f 96x1 werden miteinander mit 185 Drehungen pro Meter Z verzwirnt. Dieser Zwirn wird mit einem Polyphenylensulfidgarn 220 dtex f 96x3 Z 185 und einem Polyethylenterephthalat (®Trevira hochfest) 1100 dtex f 200x2 Z 185 mit 135 Drehungen pro Meter S verzwirnt.
Man erhält ein erfindungsgemäßes Mischgarn mit einem Gesamttiter von 3535 dtex un 58,5 Vol% Polyesterfasern, 23,1 Vol% Polyphenylensulfidfasern und 18,4 Vol% Polytetrafluorethylenfasern, das sich zur Herstellung von Gleitflächen für Gleitlager mit gutem Trockenlaufverhalten eignet.

### Beispiel 2

Ein locker gedrehtes Polytetrafluorethylengarn 455 dtex f 60x1 mit einem Schutzdrall von 10 Drehungen pro Meter und ein Polyphenylensulfid-Faserstrang 220 dtex f 96x1 werden miteinander verblasen und danach mit 185 Drehungen pro Meter Z gezwirnt. Dieser Zwirn wird mit einem Polyphenylensulfidgarn 220 dtex f 96x3 Z 185 und einem Polyethylenterephthalat (®Trevira hochfest) 1100 dtex f 200x2 Z 185 mit 135 Drehungen pro Meter S verzwirnt.
Man erhält ein erfindungsgemäßes Mischgarn mit einem Gesamttiter von 3535 dtex un 58,5 Vol% Polyesterfasern, 23,1 Vol% Polyphenylensulfidfasern und 18,4 Vol% Polytetrafluorethylenfasern, das sich zur Herstellung von Gleitflächen für Gleitlager mit gutem Trockenlaufverhalten eignet.

### Beispiel 3

Ein locker gedrehtes Polytetrafluorethylengarn 455 dtex f 60x1 mit einem Schutzdrall von 25 Drehungen pro Meter und ein Polyetherimidgarn 380 dtex f 48x1 werden miteinander mit 185 Drehungen pro Meter Z verzwirnt. Dieser Zwirn wird mit einem Polyetherimidgarn 380 dtex f 48x2 Z 185 und einem Polyethylenterephthalat (®Trevira hochfest) 1100 dtex f 200x2 Z 185 mit 135 Drehungen pro Meter S verzwirnt.
Man erhält ein erfindungsgemäßes Mischgarn mit einem Gesamttiter von 3795 dtex und 55,5 Vol% Polyesterfasern, 26,6 Vol% Polyetherimidfasern und 17,6 Vol% Polytetrafluorethylenfasern, das sich zur Herstellung von Gleitflächen für Gleitlager mit gutem Trockenlaufverhalten eignet.

## Patentansprüche

1. Mehrkomponentenmischgarn, bestehend aus mindestens drei Komponenten dadurch gekennzeichnet, daß es
als erste Komponente 40 bis 70 Volumenprozent thermoplastische Fasern,
als zweite Komponente 10 bis 30 Volumenprozent Fasern aus Polyfluorkohlenwasserstoffen und
als dritte Komponente 10 bis 50 Volumenprozent Fasern aus einem Polymer dessen Schmelzpunkt mindestens 20 °C oberhalb des Schmelzpunkts der Fasern der ersten Komponente liegt, enthält.

2. Mehrkomponentenmischgarn gemäß Anspruch 1, dadurch gekennzeichnet, daß die Fasern des Mischgarns Endlosfasern sind.

3. Mehrkomponentenmischgarn gemäß mindestens einem der Ansprüche 1 und 2, dadurch gekennzeichnet, daß die Fasern im Querschnitt des Mischgarns gleichmäßig statistisch verteilt sind.

4. Mehrkomponentenmischgarn gemäß mindestens einem der Ansprüche 1 bis 3, dadurch gekennzeichnet, daß im Querschnitt des Mischgarns eine Vielzahl von Bereichen statistisch gleichmäßig verteilt sind, in denen die Fasern jeweils einer Faserkomponente gehäuft sind.

5. Mehrkomponentenmischgarn gemäß mindestens einem der Ansprüche 1 bis 4, dadurch gekennzeichnet, daß im Querschnitt des Mischgarns eine Vielzahl von Bereichen statistisch gleichmäßig verteilt sind, in denen die Fasern der zweiten Komponente mit zumindestens einem Teil der Fasern der dritten Komponente enger vereinigt sind.

6. Mehrkomponentenmischgarn gemäß mindestens einem der Ansprüche 1 bis 5, dadurch gekennzeichnet, daß im Querschnitt des Mischgarns eine Vielzahl von Bereichen statistisch gleichmäßig verteilt sind, in denen die Fasern der zweiten Komponente mit zumindestens einem Teil der Fasern der dritten Komponente in statistisch gleichmäßiger Verteilung vorliegen oder alle Bereiche der zweiten Faserkomponente unmittelbar an Bereiche der dritten Faserkomponente angrenzen.

7. Mehrkomponentenmischgarn gemäß mindestens einem der Ansprüche 1 bis 6, dadurch gekennzeichnet, daß für die erste und dritte Komponente des erfindungsgemäßen Mehrkomponentenmischgarns folgende Werkstoffpaare eingesetzt werden:
Polyestermatrixgarn mit Polyacrylnitril-Verstärkungsfasern,
Polyestermatrixgarn mit Polyphenylensulfid-Verstärkungsfasern,
Polyphenylensulfidmatrixgarn mit Polyetherketon-Verstärkungsfasern oder
Polyolefinmatrixgarn mit Polyester-Verstärkungsfasern.

8. Verfahren zur Herstellung eines Mehrkomponentenmischgarns, bestehend aus mindestens drei Komponenten dadurch gekennzeichnet, daß eine Stapelfaser-Mischung aus 40 bis 70 Volumenprozent thermoplastische Fasern als erste Komponente ,
10 bis 30 Volumenprozent Fasern aus Polyfluorkohlenwasserstoffen als zweite Komponente und
10 bis 50 Volumenprozent Fasern aus einem Polymer dessen Schmelzpunkt mindestens 20 °C oberhalb des Schmelzpunkts der Fasern der ersten Komponente liegt, als dritte Komponente besteht, gemeinsam sekundär-versponnen werden.

9. Verfahren zur Herstellung eines Mehrkomponentenmischgarns, bestehend aus mindestens drei Komponenten dadurch gekennzeichnet, daß als erste Komponente 40 bis 70 Volumenprozent thermoplastische Fasern,
als zweite Komponente 10 bis 30 Volumenprozent Fasern aus Polyfluorkohlenwasserstoffen und
als dritte Komponente 10 bis 50 Volumenprozent Fasern aus einem Polymer dessen Schmelzpunkt mindestens 20 °C oberhalb des Schmelzpunkts der Fasern der ersten Komponente liegt,
eingesetzt werden, die durch gemeinsames Verblasen von wenig oder gar nicht gedrehten, endlosen Multifilamentsträngen der drei Faserkomponenten vereinigt werden.

10. Verfahren zur Herstellung eines Mehrkomponentenmischgarns, bestehend aus mindestens drei Komponenten dadurch gekennzeichnet, daß als erste Komponente 40 bis 70 Volumenprozent thermoplastische Fasern,
als zweite Komponente 10 bis 30 Volumenprozent Fasern aus Polyfluorkohlenwasserstoffen und
als dritte Komponente 10 bis 50 Volumenprozent Fasern aus einem Polymer dessen Schmelzpunkt mindestens 20 °C oberhalb des Schmelzpunkts der Fasern der ersten Komponente liegt,
eingesetzt werden, die durch gemeinsames Verzwirnen oder durch Verflechten vereinigt werden.

11. Verfahren zur Herstellung eines Mehrkomponentenmischgarns, bestehend aus mindestens drei Komponenten dadurch gekennzeichnet, daß als erste Komponente 40 bis 70 Volumenprozent thermoplastische Fasern,
als zweite Komponente 10 bis 30 Volumenprozent Fasern aus Polyfluorkohlenwasserstoffen und
als dritte Komponente 10 bis 50 Volumenprozent Fasern aus einem Polymer dessen Schmelzpunkt mindestens 20 °C oberhalb des Schmelzpunkts der Fasern der ersten Komponente liegt,
eingesetzt werden, die dadurch vereinigt werden daß zunächst das Garn aus der zweiten Komponente mit einem Garn aus zumindest einem Teil der dritten Komponente miteinander mischt und das so erhaltene Mischgarn aus der zweiten Komponente und einen Teil der dritten Komponente des erfindungsgemäßen Mehrkomponentenmischgarns dann mit dem Resttiter der dritten Garnkomponente und mit dem Garn aus der ersten Komponente facht.

12. Verfahren gemäß Anspruch 11, dadurch gekennzeichnet, daß bei dieser zweistufigen Herstellung in der ersten und zweiten Stufe gegenläufige Zwirndrehungen aufgebracht werden.

13. Verwendung des Mehrkomponentenmischgarns des Anspruchs 1 zur Herstellung der Gleitschicht von Gleitlagern oder von Gleitringdichtungen.

## Claims

1. A multicomponent compound yarn composed of at least three components, wherein a first component comprises from 40 to 70 percent by volume of thermoplastic fibers,
a second component comprises from 10 to 30 percent by volume of polyfluorocarbon fibers, and
a third component comprises from 10 to 50 percent by volume of fiber made of a polymer whose melting point is at least 20°C above the melting point of the fibers of the first component.

2. The multicomponent compound yarn of claim 1, wherein the fibers of the compound yarn are continuous filament fibers.

3. The multicomponent compound yarn of either of claims 1 and 2, wherein the fibers are statistically uniformly distributed over the cross-section of the compound yarn.

4. The multicomponent compound yarn of at least one of claims 1 to 3, wherein there are statistically uniformly distributed over the cross-section of the compound yarn a multiplicity of regions in which the fibers of each component predominate in turn.

5. The multicomponent compound yarn of at least one of claims 1 to 4, wherein there are statistically uniformly distributed over the cross-section of the compound yarn a multiplicity of regions in which the fibers of the second component are more closely combined with at least some of the fibers of the third component.

6. The multicomponent compound yarn of at least one of claims 1 to 5, wherein there are statistically uniformly distributed over the cross-section of the compound yarn a multiplicity of regions in which the fibers of the second component are present in a statistically uniform distribution with at least some of the fibers of the third component, or all the regions of the second fiber component are immediately adjacent to regions of the third fiber component.

7. The multicomponent compound yarn of at least one of claims 1 to 6, wherein the first and third components of the multicomponent compound yarn of the invention comprise the following pairs of materials: polyester matrix yarn combined with polyacrylonitrile reinforcing fibers,
polyester matrix yarn combined with polyphenylene sulfide reinforcing fibers,
polyphenylene sulfide matrix yarn combined with polyether ketone reinforcing fibers, or polyolefin matrix yarn combined with polyester reinforcing fibers.

8. A process for producing a multicomponent compound yarn composed of at least three components, which comprises subjecting a staple fiber mixture of from 40 to 70 percent by volume of thermoplastic fibers as the first component,
from 10 to 30 percent by volume of polyfluorocarbon fibers as the second component and
from 10 to 50 percent by volume of fibers made of a polymer whose melting point is at least 20°C above the melting point of the fibers of the first component as the third component to conjoint secondary spinning.

9. A process for producing a multicomponent compound yarn composed of at least three components, which comprises using as the first component from 40 to 70 percent by volume of thermoplastic fibers,
using as the second component from 10 to 30 percent by volume of polyfluorocarbon fibers and
using as the third component from 10 to 50 percent by volume of fibers made of a polymer whose melting point is at least 20°C above the melting point of the fibers of the first component and
combining these three fiber components by conjointly jet intermingling low- or zero-twist continuous multifilament yarn strands of the three fiber components.

10. A process for producing a multicomponent compound yarn composed of at least three components, which comprises using as the first component from 40 to 70 percent by volume of thermoplastic fibers,
using as the second component from 10 to 30 percent by volume of polyfluorocarbon fibers and
using as the third component from 10 to 50 percent by volume of fibers made of a polymer whose melting point is at least 20°C above the melting point of the fibers of the first component and
combining these three fiber components by conjoint twisting or by braiding.

11. A process for producing a multicomponent compound yarn composed of at least three components, which comprises using as the first component from 40 to 70 percent by volume of thermoplastic fibers,
using as the second component from 10 to 30 percent by volume of polyfluorocarbon fibers and
using as the third component from 10 to 50 percent by volume of fibers made of a polymer whose melting point is at least 20°C above the melting point of the fibers of the first component and
combining these three fiber components by first combining the yarn of the second component with a yarn of at least part of the third component and then folding the resulting compound yarn composed of the second component and part of the third component of the multicomponent compound yarn of the invention with the remaining linear density of the third yarn component and with the yarn of the first component.

12. The process of claim 11, wherein opposite twists are applied in the first and second stages of this two-stage process.

13. The use of a multicomponent compound yarn of claim 1 for producing the sliding layer of plain bearings or of sliding ring seals.

## Revendications

1. Fil mélangé à plusieurs constituants, se composant d'au moins trois constituants, caractérisé en ce qu'il contient en tant que premier constituant 40 à 70 pour-cent en volume de fibres thermoplastiques, en tant que second constituant 10 à 30 pour-cent en volume de fibres d'hydrocarbures polyfluorés et en tant que troisième composant 10 à 50 pour-cent en volume de fibres d'un polymère dont le point de fusion est supérieur d'au moins 20°C au point de fusion des fibres du premier constituant.

2. Fil mélangé à plusieurs constituants, selon la revendication 1, caractérisé en ce que les fibres du fil mélangé sont des fibres continues.

3. Fil mélangé à plusieurs constituants, selon au moins l'une des revendications 1 et 2, caractérisé en ce que les fibres sont réparties de manière statistiquement uniforme dans la section transversale du fil mélangé.

4. Fil mélangé à plusieurs constituants, selon au moins l'une des revendications 1 à 3, caractérisé en ce que, dans la section transversale du fil mélangé, est réparti de manière statistiquement uniforme, un grand nombre de zones dans lesquelles sont entassées les fibres de chaque constituant de fibre.

5. Fil mélangé à plusieurs constituants, selon au moins l'une des revendications 1 à 4, caractérisé en ce que, dans la section transversale du fil mélangé, est réparti de manière statistiquement uniforme, un grand nombre de zones dans lesquelles les fibres du second constituant sont réunies plus intimement avec au moins une partie des fibres du troisième constituant.

6. Fil mélangé à plusieurs constituants, selon au moins l'une des revendications 1 à 5, caractérisé en ce que, dans la section transversale du fil mélangé, est réparti, de manière statistiquement uniforme, un grand nombre de zones dans lesquelles les fibres du second constituant se retrouvent avec au moins une partie des fibres du troisième constituant et sont réparties de manière statistiquement uniforme ou dans lesquelles toutes les zones du second constituant de fibre sont directement adjacentes à des zones du troisième constituant de fibre.

7. Fil mélangé à plusieurs constituants, selon au moins l'une des revendications 1 à 6, caractérisé en ce que, pour le premier et le troisième constituant du fil mélangé à plusieurs constituants, selon l'invention, sont employées les paires de matériaux suivants :
un fil de matrice de polyester avec des fibres de renfort de polyacrylonitrile,
un fil de matrice de polyester avec des fibres de renfort de sulfure de polyphénylène,
un fil de matrice de sulfure de polyphénylène avec des fibres de renfort de cétone de polyéther et un fil de matrice de polyoléfine avec des fibres de renfort de polyester.

8. Procédé pour la fabrication d'un fil mélangé à plusieurs constituants, se composant d'au moins trois composants, caractérisé en ce qu'un mélange de fibres coupées se compose de 40 à 70 pour-cent en volume de fibres thermoplastiques en tant que premier constituant, de 10 à 30 pour-cent en volume de fibres d'hydrocarbures polyfluorés en tant que second constituant et de 10 à 50 pour-cent en volume de fibres d'un polymère en tant que troisième composant, dont le point de fusion est supérieur d'au moins 20°C au point de fusion des fibres du premier constituant, ces constituants subissant un retordage secondaire commun.

9. Procédé pour la fabrication d'un fil mélangé à plusieurs constituants, se composant d'au moins trois composants, caractérisé en ce qu'on utilise en tant que premier constituant 40 à 70 pour-cent en volume de fibres thermoplastiques, en tant que second constituant 10 à 30 pour-cent en volume de fibres d'hydrocarbures polyfluorés et en tant que troisième composant 10 à 50 pour-cent en volume de fibres d'un polymère dont le point de fusion est supérieur d'au moins 20°C au point de fusion des fibres du premier constituant, constituants qui sont réunis par soufflage commun d'écheveaux multifilaments continus, peu ou absolument pas tordus, des trois constituants de fibre.

10. Procédé pour la fabrication d'un fil mélangé à plusieurs constituants, se composant d'au moins trois composants, caractérisé en ce qu'on utilise en tant que premier constituant 40 à 70 pour-cent en volume de fibres thermoplastiques, en tant que second constituant 10 à 30 pour-cent en volume d'hydrocarbures polyfluorés et en tant que troisième composant 10 à 50 pour-cent en volume de fibres d'un polymère dont le point de fusion est supérieur d'au moins 20°C au point de fusion des fibres du premier constituant, constituants qui sont réunis par retordage commun ou par entrelacement.

11. Procédé pour la fabrication d'un fil mélangé à plusieurs constituants, se composant d'au moins trois composants, caractérisé en ce qu'on utilise en tant que premier constituant 40 à 70 pour-cent en volume de fibres thermoplastiques, en tant que second constituant 10 à 30 pour-cent en volume de fibres d'hydrocarbures polyfluorés et en tant que troisième composant 10 à 50 pour-cent en volume de fibres d'un polymère dont le point de fusion est supérieur d'au moins 20°C au point de fusion des fibres du premier constituant, constituants qui sont réunis tout d'abord par le fait que le fil composé du second constituant et un fil composé d'au moins une partie du troisième constituant sont mélangés entre eux et que le fil mélangé obtenu à partir du second constituant et d'une partie du troisième constituant du fil mélangé à plusieurs constituants, selon l'invention, est ensuite doublé avec le titre résiduel du troisième constituant de fil et avec le fil composé du premier constituant.

12. Procédé selon la revendication 11, caractérisé en ce que dans cette fabrication à deux étapes, des tours de retordage de sens opposé sont appliqués dans la première et la seconde étape.

13. Utilisation du fil mélangé à plusieurs constituants de la revendication 1 pour la fabrication de la couche de glissement de paliers à contact lisse ou de garnitures d'étanchéité à anneau lisse.
